# EUROPEAN PATENT SPECIFICATION

(11) **EP 3 711 950 B1**
(45) Date of publication and mention of the grant of the patent: **01.05.2024**
(21) Application number: 20163395.5
(22) Date of filing: 16.03.2020
(51) Int. Cl.: B33Y 10/00, B33Y 70/00, C08F 285/00, C08F 290/06, C09D 151/04, C09D 151/08

(54) **INKJET ACTIVE-ENERGY-RAY-CURABLE COMPOSITION AND METHOD OF FABRICATING SOLID FREEFORM FABRICATION OBJECT**
AKTIVENERGIESTRAHLENHÄRTBARE TINTENSTRAHLZUSAMMENSETZUNG UND VERFAHREN ZUR HERSTELLUNG EINER FESTSTOFFFREIFORM EINES OBJEKTS
COMPOSITION DE JET D'ENCRE DURCISSABLE PAR RAYONNEMENT D'ÉNERGIE ACTIVE ET PROCÉDÉ DE FABRICATION D'UN OBJET DE FABRICATION DE FORME LIBRE SOLIDE

(30) Priority: 20.03.2019 JP 2019053125
(43) Date of publication of application: 23.09.2020
(73) Proprietor: Ricoh Company, Ltd., Tokyo 143-8555 (JP)
(72) Inventor: OKADA, Noriaki, Tokyo, 143-8555 (JP); NAITO, Hiroyuki, Tokyo, 143-8555 (JP); SHIBA, Keisuke, Tokyo, 143-8555 (JP)
(74) Representative: Marks & Clerk LLP

(56) References cited:
- WO-A1-2008/115057
- WO-A1-2017/044381
- DE-A1-102014 109 233
- US-A1- 2018 290 377

## Description

### BACKGROUND

### Technical Field

The present invention relates to an inkjet active-energy-ray-curable composition and a method of fabricating a solid freeform fabrication object.

### Description of the Related Art

Additive manufacturing (AM) is known as a technology for fabricating a solid freeform fabrication object.

This technology calculates cross-sections sliced along the lamination direction of an object and forms and laminates respective layers according to the shape of the cross-sections to fabricate the object.

Of the additive manufacturing technologies, material jetting methods of fabricating three-dimensional objects are appealing and selectively deposits a photocurable composition with an inkjet head and cures the selectively deposited photocurable composition by a photoirradiator.

The material jetting method is mainly utilized for prototyping and has a problem with striking a balance between extensibility and heat resistance of an object fabricated by the material jetting method. This is because a fabrication object having a good extensibility is fabricated by using a photocurable composition which tends to be weak to heat while a fabrication object having a good heat resistance is fabricated by a photocurable resin which tends to have a poor extensibility.

In an attempt to solve this problem, a curable resin composition containing a cationically polymerizable compound and elastomer particles has been proposed in JP-5334389-B1 (JP-2008-266551-A1) and JP-5317503-B1 (2009-62510-A1).

In addition, an active-energy-ray-curable composition having excellent discharging stability, striking a balance between hardness and bending resistance, and storage stability as a composition has been proposed in JP-2017-095577-A1. It contains a polymerizable compound and two or more types of resin particles or an aggregation thereof and the resin particles includes resin particles having a Tg of 30 degrees C or higher and resin particles having a Tg of 0 degrees C or lower. An example of the aggregation is a resin having a core-shell structure.

However, viscosity of such a curable resin composition containing a cationically polymerizable compound is too high to be used for a material jetting method.

US 2018/290377, WO2017/044381, DE 102014109233 and WO 2008/115057 all propose compounds for use in additive manufacturing.

### SUMMARY

According to the present disclosure, provided is an active energy ray curable composition that has excellent extensibility and heat resistance at the same time and is suitably used for inkjet applications, in particular, for fabricating a solid freeform (three-dimensional) object.

According to one aspect, provided is an inkjet active-energy-ray-curable composition which includes a radical polymerizable monomer, a core-shell-type elastomer particle, and a polymerization initiator in accordance with claim 1. Further aspects and preferred embodiments are set out n claim 2 et seq.

### BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
FIG. 1 is a schematic diagram illustrating an example of a fabrication device according to an embodiment of the present disclosure; and
FIG. 2 is a diagram illustrating a method of producing a test piece for use in a extensibility test.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc., in the present disclosure represent the same meaning, unless otherwise specified.

Embodiments of the present invention are described in detail below with reference to accompanying drawing(s). In describing embodiments illustrated in the drawing(s), specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

The active energy ray curable composition of the present disclosure containing a radical polymerizable monomer (compound A), a core-shell type elastomer particle (compound B), and a polymerization initiator (compound C) can be applied to an inkjet method.

The composition can be used for inkjet due to inclusion of the radical polymerizable monomer (compound A). In addition, the composition enhances fracture elongation and extensibility due to inclusion of the core-shell type elastomer particle.

Examples of the radical polymerizable monomer include a mono-functional monomer and a polyfunctional monomer. These can be used alone or in combination. The proportion of the radical polymerizable monomer is from 50.0 to 95.0 percent by mass, more preferably from 60.0 to 85.0 percent by mass. Inclusion of the radical polymerizable monomer (the compound A) reduces viscosity of the composition. Therefore, the composition of the present disclosure has a viscosity sufficiently low for an inkjet application.

Examples of the radical polymerizable monomer that can be used in the present disclosure include an acrylic monomer and an epoxy monomer. Inclusion of an acrylic monomer is particularly preferable. Acrylic monomers have a high curing rate and are suitable for inkjet. When an epoxy monomer is used, it is particularly preferable to use it in combination with an acrylic monomer.

Specific examples of epoxy monomers include bis (3,4 epoxycyclohexyl) and bisphenol A diglycidyl ether. When an epoxy monomer is used in combination with an acrylic monomer, it is preferable to further use an oxetane monomer in combination. When an epoxy monomer is used in combination with an acrylic monomer, the proportion of the epoxy monomer is from 40 to 60 percent by mass, the proportion of the monofunctional acrylic monomer is from 10 to 20 percent by mass, the proportion of the bifunctional acrylic monomer is from 10 to 20 percent by mass, the proportion of the oxetane monomer is from 10 to 20 percent by mass, the proportion of polyhydric alcohol is from 1 to 10 percent by mass, the proportion of a radical polymerization initiator is from 0.1 to 5 percent by mass, and the proportion of a cationic polymerization initiator is from 0.1 to 5 percent by mass,.

Specific examples of the monofunctional acrylic monomer include to, acrylamide, N,N-dimethyl acrylamide, N-isopropyl acrylamide, acryloylmorpholine, hydroxyethyl acrylamide, isobornyl (meth)acrylate, 2-ethylhexyl (meth)acrylate, 2-hydroxyethyl (meth)acrylate, 2-hydroxypropyl (meth)acrylate, caprolactone-modified tetrahydrofurfuryl (meth)acrylate, 3-methoxybutyl (meth)acrylate, tetrahydrofurfuryl (meth)acrylate, lauryl (meth)acrylate, 2-phenoxyethyl (meth)acrylate, isodecyl (meth)acrylate, isooctyl (meth)acrylate, tridecyl (meth)acrylate, caprolactone (meth)acrylate, and ethoxylated nonylphenol (meth)acrylate.

The multifunctional acrylic monomers may be appropriately selected depending on the intended purpose. Examples of the multifunctional monomers include bifunctional monomers and tri- or higher functional monomers. These can be used alone or in combination.

Specific examples of the bifunctional acrylic monomers include tripropylene glycol di(meth)acrylate, triethylene glycol di(meth)acrylate, tetraethylene glycol di(meth)acrylate, polypropylene glycol di(meth)acrylate, neopentyl glycol hydroxypivalic acid ester di(meth)acrylate, hydroxypivalic acid neopentyl glycol ester di(meth)acrylate, 1,3-butanediol di(meth)acrylate, 1,4-butanediol di(meth)acrylate, 1,6-hexanediol di(meth)acrylate, 1,9-nonanediol di(meth)acrylate, diethylene glycol di(meth)acrylate, neopentyl glycol di(meth)acrylate, tripropylene glycol di(meth)acrylate, tricyclodecane dimethanol di(meth)acrylate, caprolactone-modified hydroxypivalic acid neopentyl glycol ester di(meth)acrylate, propoxylated neopentyl glycol di(meth)acrylate, ethoxy-modified bisphenol A di(meth)acrylate, polyethylene glycol 200 di(meth)acrylate, and polyethylene glycol 400 di(meth)acrylate.

Specific examples of the tri- or higher functional acrylic monomers include trimethylolpropane tri(meth)acrylate, pentaerythritol tri(meth)acrylate, dipentaerythritol hexa(meth)acrylate, triallyl isocyanurate, ε-caprolactone-modified dipentaerythritol tri(meth)acrylate, ε-caprolactone-modified dipentaerythritol tetra(meth)acrylate, (meth)acrylate, ε-caprolactone-modified dipentaerythritol penta(meth)acrylate, ε-caprolactone-modified dipentaerythritol hexa(meth)acrylate, tris(2-hydroxyethyl)isocyanurate tri(meth)acrylate, ethoxylated trimethylolpropane tri(meth)acrylate, propoxylated trimethylolpropane tri(meth)acrylate, propoxylated glyceryl tri(meth)acrylate, pentaerythritol tetra(meth)acrylate, ditrimethylolpropane tetra(meth)acrylate, dipentaerythritol hydroxy penta(meth)acrylate, ethoxylated pentaerythritol tetra(meth)acrylate, and penta(meth)acrylate ester.

The core-shell-type elastomer particle (compound B) can be used alone or in combination. The proportion of the core-shell-type elastomer particle is preferably from 0.5 to 40.0 percent by mass and more preferably from 1.0 to 20.0 percent by mass.

The core-shell-type elastomer particle has a multilayered structure formed of a core part and a shell part. Examples of the material of the core part include rubber and thermoplastic resins.

Examples of the rubber include natural rubber (NR), styrene/butadiene rubber (SBR), isoprene rubber (IR), butadiene rubber (BR), chloroprene rubber (CR), acrylonitrile/butadiene rubber (NBR), butyl rubber (IIR), ethylene/propylene rubber (EPM), ethylene/propylene/diene rubber (EPDM), urethane rubber (U), silicone rubber (Si, Q), chlorosulfonated polyethylene rubber (CSM), acrylic rubber (ACM, ANM), epichlorohydrin rubber (CO, ECO), and fluororubber (FKM).

Examples of the thermoplastic resins include styrene-based resins, olefin-based resins, ester-based resins, urethane-based resins, amide-based resins, PVC-based resins, and fluororesins.

Examples of the shell include compounds and resins that have a high affinity with the radical polymerizable monomer (the compound A) or the radical polymerizable oligomer (the compound D). Due to the shell part of such a compound or a resin, dispersion stability of the elastomer particles in the active-energy-ray-curable composition can be enhanced and further adhesiveness at the interface between the elastomer particles and the matrix resin in a fabrication object can be improved.

### Confirmation of Core-shell Structure

It is preferable to confirm the core-shell structure by evaluation according to the following method using a transmission electron microscope (TEM). The core-shell structure of an elastomer particle is defined to have an inside coated with the surface having contrast components different from the inside component of the elastomer particles when it is observed with a TEM.

First, a specific composition is irradiated with active energy rays to produce a cured product. The method of producing the cured product is in accordance with the method described in Examples. The temperature over a substrate is controlled so as not to be risen.

The sample is exposed to a gas of ruthenium tetroxide, osmium tetroxide, or any other dye for one minute to 24 hours to distinguishably dye the shell part and the core part. The time spent in the exposure is appropriately adjusted depending on the contrast during observation. A cross-section is exposed with a knife, and an ultrathin piece (having a thickness of 200 nm) of the resin particle is produced using an ultramicrotome (ULTRACUT UCT, using a diamond knife, available from Leica Corporation).

Subsequently, the ultrathin piece is observed with a TEM (H7000, available from Hitachi High-Technologies Corporation) at an accelerating voltage of 100 kV. Depending on the compositions of the shell part and the core part, the shell part and the core part may be distinguishable undyed from each other. In such a case, the core-shell structure is evaluated undyed. It is also possible to impart a compositional contrast by another method such as selective etching, and it is also preferable to observe and confirm the core-shell structure with a TEM after such a pre-treatment.

The mean volume diameter (volume average particle diameter) of the core-shell-type elastomer particles is preferably from 50 to 1,000 nm and more preferably from 50 to 500 nm. When the mean volume diameter is 50 nm or greater, a fabrication object can e reflect the property of the elastomer particle. When the mean volume diameter is 1,000 nm or less, discharging stability by an inkjet head can be secured. Moreover, in consideration of dispersion stability in the active-energy-ray-curable composition, the mean volume diameter of the core-shell-type elastomer particles is preferably 500 nm or less.

The mean volume diameter can be measured by an instrument such as a particle size analyzer (Microtrac MODEL UPA 9340, manufactured by NIKKISO CO., LTD.) after the curable composition is diluted with a solvent of the curable composition.

As the photopolymerization initiator (the compound C), any material can be used which produces a radical upon irradiation of light (in particular, ultraviolet rays having a wavelength in a range of from 220 to 400 nm). These can be used alone or in combination. The proportion of the core-shell-type elastomer particle is preferably from 0.1 to 10.0 percent by mass and more preferably from 1.0 to 5.0 percent by mass.

Specific examples of the polymerization initiator include acetophenone, 2, 2-diethoxyacetophenone, p-dimethylaminoacetophenone, benzophenone, 2-chlorobenzophenone, p,p'-dichlorobenzophenone, p,p-bisdiethylaminobenzophenone, Michler's ketone, benzyl, benzoin, benzoin methyl ether, benzoin ethyl ether, benzoin isopropyl ether, benzoin-n-propyl ether, benzoin isobutyl ether, benzoin-n-butyl ether, benzyl methyl ketal, thioxanthone, 2-chlorothioxanthone, 2-hydroxy-2-methyl-1-phenyl-1-one, 1-(4-isopropylphenyl)2-hydroxy-2-methylpropan-1-one, methyl benzoylformate, 1-hydroxycyclohexyl phenyl ketone, azobis(isobutylonitrile), benzoyl peroxide, and di-tert-butyl peroxide.

The inkjet active-energy-ray-curable composition may further contain a radical polymerizable oligomer (compound D). The radical polymerizable oligomer may be used alone or in combination. Low-molecular-weight polymers of the radical polymerizable monomer and/or the radical polymerizable monomer (compound A) having a reactive unsaturated linking group at a terminal can be used alone or in combination. The proportion of the radical polymerizable oligomer is preferably from 1.0 to 40.0 percent by mass and more preferably from 10.0 to 30.0 percent by mass.

An oligomer is a generic term of molecules having repeating structures of a low-molecular-weight molecule, and the number of the repeating structures is typically about from 2 through 20.

The radical polymerizable oligomer preferably contains a urethane acrylate oligomer in terms that a high toughness tends to be obtained due to interaction between side chains. Inclusion of the radical polymerizable oligomer generally enhances extensibility of a cured product.

Use of a photo-cationic polymerizable monomer and a photo-cationic polymerizable oligomer instead of the radical polymerizable monomer (compound A) and the radical polymerizable oligomer (compound D) increases viscosity and polymerization speed decreases. As a result, the composition may be inapplicable to inkjet.

The active-energy-ray-curable composition of the present disclosure may contain components other than the radical polymerizable monomer (compound A), the core-shell-type elastomer particles (comopund B), the polymerization initiator (compound C), and the radical polymerizable oligomer (compound D). Such components may be appropriately selected depending on the intended purpose. Examples include surfactants, polymerization inhibitors, and colorants.

The surfactant has, for example, a molecular weight of from 200 to 5,000.

Specific examples include PEG-type nonionic surfactants [e.g., adducts of nonyl phenol with 1 to 40 mole ethylene oxide (hereinafter, abbreviated as EO), and adducts of stearic acid with 1 to 40 mole EO], polyvalent alcohol-type nonionic surfactants (e.g., sorbitan palmitic acid monoester, sorbitan stearic acid monoester, and sorbitan stearic acid triester), fluorochemical surfactants (e.g., adducts of perfluoroalkyl, perfluoroalkyl carboxylic acid salts with 1 to 50 mole EO, and perfluoroalkyl betaine), and modified silicone oil [e.g., polyether-modified silicone oil and (meth)acrylate-modified silicone oil]. These can be used alone or in combination.

Specific examples of the polymerization inhibitor include phenol compounds (e.g., hydroquinone, hidroquinone monomethyl ether, 2,6-di-t-butyl-p-cresol, 2,2-methylene-bis-(4-methyl-6-t-butylphenol), and 1,1,3-tris-(2-methyl-4-hydroxy-5-t-butylphenyl)butane), sulfur compounds (e.g., dilaurylthio dipropionate), phosphorus compounds (e.g., triphenyl phosphite), and amine compounds (e.g., phenothiadine).

These can be used alone or in combination.

As the colorant, pigments and dyes that are dissolved or stably dispersed in the active energy ray curable composition and further have excellent thermal stability are suitable. Of these, solvent dyes are preferable. Further, two or more types of colorants may be timely mixed for color adjustment or other.

### Organic Solvent

The active energy ray curable composition of the present disclosure may contain an organic solvent but is preferably free of it. The curable composition free of an organic solvent, in particular volatile organic compound (VOC), enhances safety at the place where the composition is handled and makes it possible to prevent pollution of the environment. The organic solvent represents a typical non-reactive organic solvent such as ether, ketone, xylene, ethylacetate, cyclohexanone, or toluene, which is clearly distinguished from a reactive monomer. Furthermore, "free of" an organic solvent means that no organic solvent is substantially included. The proportion thereof is preferably less than 0.1 percent by mass.

### Preparation of Active Energy Ray Curable Composition

The active energy ray curable composition of the present disclosure can be prepared by using the components described above. The preparation devices and conditions are not particularly limited. For example, the curable composition can be prepared by charging a polymerizable monomer, a pigment, a dispersant, and other substances into a dispersing machine such as a ball mill, kitty mill, a disk mill, a pin mill, and a DYNO-MILL to prepare a liquid dispersion followed by mixing with a polymerizable monomer, a polymerization initiator, a polymerization inhibitor, and a surfactant furthermore followed by mixing with the core-shell type elastomer.

The composition suitably applicable to inkjet preferably has a low viscosity in terms of dischargeability from nozzles. Hence, in one embodiment, the viscosity of the active energy ray curable composition of the present disclosure is preferably 200 mPa·s or less and more preferably 150 mPa·s or less at 25 degrees C. Therefore, active energy ray curable composition of the present disclosure is also preferable for molding fabrication.

Further, in terms of dischargeability and fabrication accuracy, the viscosity is preferably 9 mPa·s or higher at 25 degrees C. During fabrication, it is possible to adjust the viscosity of the active energy ray curable composition by controlling the temperature of the inkjet head or the ink flow path.

The viscosity can be measured by a routine procedure. The method according to JIS Z 8803 format or other can be used. The viscosity can be also measured by a cone plate rotary viscometer (VISCOMETER TVE-22L, manufactured by TOKI SANGYO CO., LTD.) using a cone rotor (1°34' × R24) at a rate of rotation of 50 rpm at a temperature of hemathermal circulating water in the range of 20 degrees C to 65 degrees C. VISCOMATE VM-150III can be used for the temperature control of the circulating water.

The surface tension of the compositions applicable to inkjet is preferably in the range of from 20 to 40 mN/m at 25 degrees C in terms of discharging stability, fabrication accuracy, and others. In one embodiment, the active energy ray curable composition of the present disclosure has a surface tension of from 20 to 40 mN/m at 25 degrees C.

The surface tension can be measured by a routine procedure. Examples of such measuring methods include, but are not limited to, a plate method, a ring method, and a pendant drop method.

### Active Energy Ray

Active energy rays for curing the active energy ray curable composition of the present disclosure are preferably light, in particular, ultraviolet rays having a wavelength of from 220 to 400 nm. Active energy rays are not particularly limited so long as they are able to apply energy necessary for allowing polymerization reaction of polymerizable components in the composition to proceed. Examples of the active energy rays include, but are not limited to, electron beams, α-rays, β-rays, γ-rays, and X-rays, in addition to ultraviolet rays. Preferably, in another embodiment, a particularly high energy light source obviates the need for a polymerization initiator to proceed polymerization reaction. In addition, mercury-free is strongly preferred in the case of irradiation with ultraviolet rays in terms of protection of environment. Therefore, replacement with GaN-based semiconductor ultraviolet light-emitting devices is preferred from industrial and environmental point of view. Furthermore, ultraviolet light-emitting diodes (UV-LED) and ultraviolet laser diodes (UV-LD) are preferable as ultraviolet ray light sources because they have small sizes, long working life, and high efficiency, and enjoy high cost performance.

A method of fabricating a solid freeform fabrication object and a device for fabricating a solid freeform fabrication object are described below when the active energy ray curable composition of the present disclosure is used as a model part forming material. However, applications of the active energy ray curable composition of the present disclosure are not limited to these embodiments.

### Fabrication Device

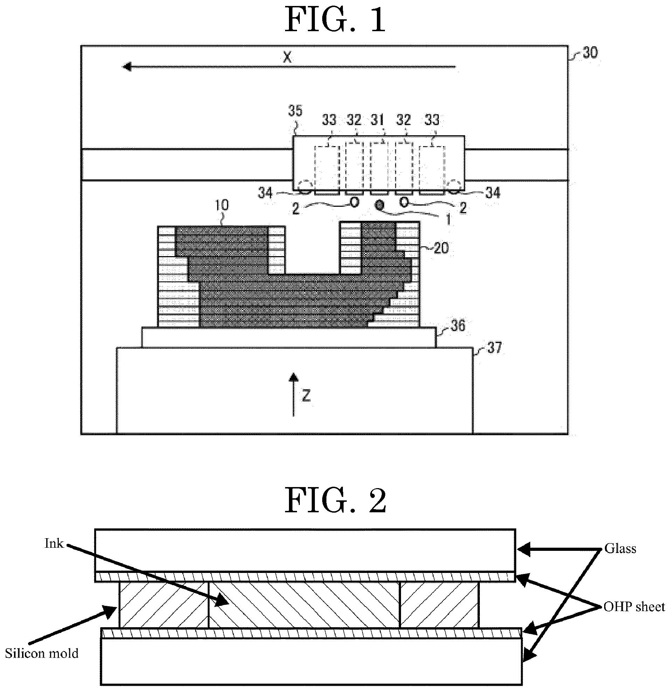

FIG. 1 is a schematic diagram illustrating a fabrication device according to an embodiment of the present disclosure. A fabrication device 30 includes head units 31 and 32, an ultraviolet irradiator 33, a roller 34, a carriage 35, and a stage 37. The head unit 31 is configured to discharge a model part forming material 1. The head unit 32 is configured to discharge a support part forming material 2. The ultraviolet irradiator 33 is configured to irradiate and cure the discharged model part forming material 1 and the discharged support part forming material 2 with ultraviolet rays. The roller 34 is configured to flatten liquid films of the model part forming material 1 and the support part forming material 2. The carriage 35 is configured to reciprocally move the units such as the head units 31 and 32 in the X direction of FIG. 1. The stage 37 is configured to move a substrate 36 in the Z direction indicated in FIG. 1 and in the Y direction, which is the depth direction of FIG. 1. The substrate 36 can be moved in the Y direction by the carriage 35 instead of the stage 37.

When there are a plurality of model part forming materials for respective colors, the fabrication device 30 may be provided with a plurality of head units 31 configured to discharge the model part forming materials 1 of the respective colors.

The nozzles of the head units 31 and 32 can be suitably the nozzles of a known inkjet printer.

Examples of metals that are applicable to the roller 34 include, but are not limited to, SUS300 series, 400 series, and 600 series, hexavalent chromium, silicon nitride, and tungsten carbide. Moreover, any of these metals may be coated with, for example, fluorine or silicone and applied to the roller 34. Of these metals, SUS600 series are preferable in terms of strength and processibility.

When the roller 34 is used, the fabrication device 30 laminates layers while the stage 37 is lowered in accordance with the number of layers laminated, in order to keep the gap between the roller 34 and the surface of the fabrication object the same. In a preferable configuration, the roller 34 adjoins the ultraviolet irradiator 33.

In order to prevent drying of the ink during suspension, the fabrication device 30 may be provided with a device such as a cap configured to cover the nozzles of the head units 31 and 32. In order to prevent clogging of the nozzles during excessive continued use, the fabrication device 30 may be provided with a maintenance mechanism configured to maintain the heads.

### Fabrication Method

The steps executed by the fabrication device 30 will be described below.

While the carriage 35 or the stage 37 was moved, the engine of the fabrication device 30 causes the head unit 31 to discharge liquid droplets of the model part forming material 1 and causes the head unit 32 to discharge liquid droplets of the support part forming material 2 in response to two-dimensional data representing the bottommost cross-section of the input two-dimensional data.

As a result, the liquid droplets of the model part forming material 1 are selectively deposited at positions corresponding to pixels representing the model part and the liquid droplets of the support part forming material 2 are selectively deposited at positions corresponding to pixels representing the support part in the two-dimensional data representing the bottommost cross-section, to form a liquid film in which the liquid droplets positioned adjacent to each other contact each other.

When there is one fabrication object to be produced, a liquid film having a cross-sectional shape is formed in the center of the stage 37. When there are a plurality of fabrication objects to be produced, the fabrication device 30 may form liquid films of a plurality of cross-sectional shapes on the stage 37 or may laminate a liquid film on a previously fabricated fabrication object.

It is preferable to provide the head units 31 and 32 with heaters. Further, it is preferable to provide pre-heaters on the path for supplying the model part forming material 1 to the head unit 31 and the path for supplying the support part forming material 2 to the head unit 32.

In the flattening, the roller 34 scrapes away excessive parts of the model part forming material 1 and the support part forming material 2 discharged onto the stage 37, to flatten out irregularities of the liquid films or layers formed of the model part forming material 1 and the support part forming material 2. The flattening may be conducted each time a layer is laminated in the Z axis direction or may be conducted once every two to fifty layers are laminated.

In the flattening, the roller 34 may be suspended or may be rotated at a positive or negative relative speed with respect to the traveling direction of the stage 37. The rotation of the roller 34 may be kept constant, accelerated, or decelerated. The rate of rotation of the roller 34 is preferably from 50 to 400 mm/s as the absolute value of the relative speed with respect to the stage 37. When the relative speed is too low, flattening is insufficient, thereby degrading flatness. When the relative speed is too high, the device needs to be increased in size, and liquid droplets tend to be mispositioned due to factors such as vibration. This may consequently degrade the flatness.

In the flattening, the rotation direction of the roller 34 is preferably opposite to the traveling direction of the head units 31 and 32.

In the curing, the engine of the fabrication device 30 causes the carriage 35 to move the ultraviolet irradiator 33 to irradiate the liquid film formed in the liquid film forming with ultraviolet rays corresponding to the wavelength of the photopolymerization initiator contained in the model part forming material 1 and the support part forming material 2. Due to this, the fabrication device 30 cures the liquid film to form a layer.

After the bottommost layer has been formed, the engine of the fabrication device 30 lowers the stage 37 by the distance corresponding to one layer.

While the carriage 35 or the stage 37 is moved, the engine of the fabrication device 30 discharges liquid droplets of the model part forming material 1 and liquid droplets of the support part forming material 2 in response to two-dimensional image data representing the second bottommost cross-section. The discharging method is the same as when the bottommost liquid film is formed. As a result, a liquid film having the cross-sectional shape represented by the two-dimensional data of the second bottommost cross section is formed over the bottommost layer. Further, the engine of the fabrication device 30 causes the carriage 35 to move the ultraviolet irradiator 33 to irradiate the liquid film with ultraviolet rays to cure the liquid film and form the second bottommost layer the bottommost layer.

The engine of the fabrication device 30 repeats forming and curing of a liquid film in the same manner as described above using the input two-dimensional data in the order of closeness to the bottom, to laminate layers. The number of repeating changes depending on the number of two-dimensional image data input, or the height and shape of a three-dimensional model. When fabrication is complete with all the two-dimensional image data, an object of a model part supported by a support part is obtained.

The fabrication object produced by the fabrication device 30 includes a model part and a support part. The support part is removed from the object after the fabrication. Examples of the removing method include, but are not limited to, physical removal and chemical removal. In the physical removal, a mechanical force is applied to remove the support part. On the other hand, in the chemical removal, the support part is disintegrated and removed by immersion in a solvent. The method for removing the support part is not particularly limited, but the chemical removal is preferred because the physical removal may break the object. Furthermore, in terms of the cost, the removing method by immersion in water is preferred. For the removing method by immersion in water, the support part forming material 2 is selected based on water disintegration property of a cured product of the support forming material 2.

As described above, the active energy ray curable composition of the present disclosure can be suitably applied to inkjet methods, in particular, production of a solid freeform fabrication object by the inkjet method. Accordingly, the present disclosure includes solid freeform fabrication objects produced with the active energy ray curable composition of the present disclosure. The method of fabricating a solid freeform fabrication object is not particularly limited so long the active energy ray curable composition of the present disclosure is used, the example of which includes, but are not limited to, molding fabrication method and a fabrication method using inkjet technology such as material jetting method. Examples of the method using inkjet technologies include, but are not limited to, the method described in detail in Fabrication Method described above.

In the descriptions in the following examples, the numbers represent weight ratios in parts, unless otherwise specified.

### EXAMPLES

Next, embodiments of the present disclosure are described in detail with reference to Examples but not limited thereto.

### Example 1

### Preparation of Photo-curable Composition

A total of 63.0 parts of isobornyl acrylate (available from Osaka Organic Chemical Industry Ltd.), 20.0 parts of tricyclodecane dimethanol diacrylate (A-DCP, available from Shin-Nakamura Chemical Co., Ltd.) and 11.0 parts of a urethane acrylate oligomer (UV-6630B, available from Nippon Gohsei Limited) were uniformly mixed. Next, to the resulting mixture, 4.0 parts of diphenyl(2,4,6-trimethylbenzoyl)phosphine oxide (OMUNIRAD TPO, available from BASF SE) was uniformly admixed as a photopolymerization initiator. Next, 2.0 parts of core-shell-type elastomer particles (KANEACE M-210, available from Kaneka Corporation) was uniformly admixed to the resulting mixture. Next, the resulting mixture was filtered by passage through a filter (CCP-FX-C1B, an average pore diameter of 3 micrometers, available from ADVANTEC CO., LTD.) to obtain a photo-curable composition of Example 1. The viscosity of the photo-curable composition at 25 degrees C was 100 mPa·s or lower.

### Examples 2 to 4 and Comparative Examples 1 to 3

Photo-curable compositions of Examples 2 to 4 were produced according to the formulation shown in Table 1 in the same manner as in Example 1. Photo-curable compositions of Comparative Examples 1 to 3 were produced in the same manner as in Example 1 to 3, except that no core-shell-type elastomer particles were added. The viscosity in any of Example and Comparative Example was 100 mPa·s or lower at 25 degrees C.

**Table 1**

| Material | Product | Manufacturer | Example 1 | Example 2 | Example 3 | Example 4 |
|---|---|---|---|---|---|---|
| | | | parts | parts | parts | parts |
| Radical polymerizable monomer (compound A) | Isobornyl acrylate | Osaka Organic Chemical Industry Ltd. | 63.0 | 63.0 | 63.0 | 63.0 |
| | A-DCP | Shin-Nakamura Chemical Co., Ltd. | 20.0 | | 20.0 | 20.0 |
| | APG-100 | Shin-Nakamura Chemical Co., Ltd. | | 20.0 | | |
| Core-shell-type elastomer particle (compound B) | KANEACE M-210 | Kaneka Corporation | 2.0 | 2.0 | 2.0 | |
| | KANEACE M-230 | Kaneka Corporation | | | | 2.0 |
| Polymerization initiator (compound C) | OMUNIRAD TPO | BASF SE | 4.0 | 4.0 | 4.0 | 4.0 |
| Radical polymerizable oligomer (compound D) | UV-6630B | Nippon Gohsei Limited | 11.0 | 11.0 | | 11.0 |
| | CN983NS | Sartomer Company | | | 11.0 | |
| Total | | | 100.0 | 100.0 | 100.0 | 100.0 |

| Material | Product | Manufacturer | Comparative Example 1 | Comparative Example 2 | Comparative Example 3 |
|---|---|---|---|---|---|
| | | | parts | parts | parts |
| Radical polymerizable monomer (compound A) | Isobornyl acrylate | Osaka Organic Chemical Industry Ltd. | 63.0 | 63.0 | 63.0 |
| | A-DCP | Shin-Nakamura Chemical Co., Ltd. | 20.0 | | 20.0 |
| | APG-100 | Shin-Nakamura Chemical Co., Ltd. | | 20.0 | |
| Core-shell-type elastomer particle (compound B) | KANEACE M-210 | Kaneka Corporation | 2.0 | 2.0 | 2.0 |
| | KANEACE M-230 | Kaneka Corporation | | | |
| Polymerization initiator (compound C) | OMUNIRAD TPO | BASF SE | 4.0 | 4.0 | 4.0 |
| Radical polymerizable oligomer (compound D) | UV-6630B | Nippon Gohsei Limited | 11.0 | 11.0 | |
| | CN983NS | Sartomer Company | | | 11.0 |
| Total | | | 98.0 | 98.0 | 98.0 |

Details of the materials shown in Table 1 are as follows.

### · Radical polymerizable monomer:

· Isobornyl acrylate: available from Osaka Organic Chemical Industry Ltd.
· A-DCP: tricyclodecane dimethanol diacrylate, available from Shin-Nakamura Chemical Co., Ltd.
· APG-100: dipropylene glycol diacrylate, available from Shin-Nakamura Chemical Co., Ltd.
· Radical polymerizable monomer
· UV-6630B: UV-curable urethane acrylate oligomer, with a molecular weight of 3,000, and two oligomer functional groups, available from Nippon Gohsei Limited
· CN983NS: aliphatic urethane acrylate oligomer, with two functional groups, available from Sartomer Company
· Polymerization Initiator
· OMUNIRAD TPO: available from BASF SE

### Core-shell-type elastomer particle

· KANEACE M-210: acrylic-based rubber, with a volume average particle diameter of 300 nm, available from Kaneka Corporation
· KANEACE M-230: acrylic-based rubber, with a volume average particle diameter of 100 nm, available from Kaneka Corporation

### Evaluation of Discharging Stability

The thus-obtained photo-curable composition was continuously discharged for 60 minutes with an inkjet discharging device mounted with a GEN4L head (available from Ricoh Printing Systems Inc.) and the number of nozzles that caused nozzle omission was counted in the total of 768 nozzles and evaluated according to the evaluation criteria described below. The discharging conditions were set to a drive frequency of 1 kHz and a heating temperature of 80 degrees C. Nozzle omission means that the ink droplet is not discharged from clogged nozzle.

### Evaluation Criteria

· A: 0 nozzles
· B: one or more nozzles

### Production of Test Piece

As illustrated in FIG. 2, a transparent (OHP) sheet was placed over a glass substrate, and a silicon mold (with a shape of tensile mold No. 6, JIS K 6251 format, with a thickness of 1 mm) was brought into close contact with the transparent sheet. Next, the silicon mold was filled with the photo-curable composition, covered with a transparent sheet and overlaid with a glass plate. Next, the photo-curable composition was irradiated with ultraviolet rays having an irradiation intensity of 200 mW/cm² for five minutes through the glass plate with an ultraviolet irradiator (SPOT CURE SP5-250DB, available from Ushio Inc.). Next, the photo-curable composition was irradiated again with ultraviolet rays having an irradiation intensity of 200 mW/cm² for five minutes from the surface opposite to the surface previously irradiated with ultraviolet rays. Next, the transparent sheets were peeled off, and the test piece was taken out from the silicon mold and left to stand still for 24 hours in the environment of which the temperature was 23 degrees C and the relative humidity was 50 percent.

### Evaluation of Extensibility

The test piece was subjected to tensile test with a precision universal tester (AUTOGRAPH AG-X, available from Shimadzu Corporation), to obtain the coefficient of elongation of the test piece at rupture, which was evaluated according to the evaluation criteria described below. The test was conducted at a tensile speed of 5 mm/min and with a distance of 50 mm between tensile jigs.

### Evaluation Criteria

· A: 5 percent or higher
· B: less than 5 percent

### Evaluation of Heat Resistance

The glass transition temperature (onset temperature) of the test piece was obtained by differential scanning calorimetry (DSC) and evaluated according to the evaluation criteria described below. Specifically, DSC was measured in an appropriate temperature range, to analyze the baseline shift of the DSC curve. The instrument used was DSC Q2000 (available from TA Instruments). The rate of temperature rising was 10 degrees C per minute.

### Evaluation Criteria

· A: 70 degrees C or higher
· B: Lower than 70 degrees C

The results of Examples 1 to 4 and Comparative Examples 1 to 3 are shown in Tables 1 to 3.

As seen in the results shown in Table 2, Examples 1 to 4 can be applied to material jetting methods and have good extensibility and heat resistance at the same time. In comparison between Examples 1 to 4 and Comparative Examples 1 to 3, the addition of the core-shell-type elastomer particles enhances extensibility without degrading heat resistance.

**Table 2**

| | Discharging stability | Heat resistance | Extensibility |
|---|---|---|---|
| Example 1 | A | A | A |
| Example 2 | A | A | A |
| Example 3 | A | A | A |
| Example 4 | A | A | A |
| Comparative Example 1 | A | A | B |
| Comparative Example 2 | A | A | B |
| Comparative Example 3 | A | A | B |

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

## Claims

1. An active-energy-ray-curable composition for inkjet application, comprising:
a radical polymerizable monomer;
a core-shell-type elastomer particle; and
a polymerization initiator;
wherein a proportion of the radical polymerizable monomer is from 50.0 to 95.0 percent by mass and a proportion of the core-shell-type elastomer particle is from 0.5 to 40.0 percent by mass.

2. The composition according to claim 1, having a viscosity of 200 mPa·s or less at 25 degrees C, measured as described in the description.

3. The composition according to any one of claims 1 to 2, wherein a proportion of the polymerization initiator is from 0.1 to 10.0 percent by mass.

4. The composition according to any one of claims 1 to 3, wherein the radical polymerizable monomer comprises an acrylic-based monomer.

5. The composition according to any one of claims 1 to 4, wherein the core-shell-type elastomer particle has a mean volume diameter of from 50 to 1,000 nm, measured as described in the description.

6. The composition according to any one of claims 1 to 5, wherein the core-shell-type elastomer particle has a multilayered structure formed of a core part and a shell part.

7. The composition according to claim 6, wherein the core part includes one of: rubber and thermoplastic resins.

8. The composition according to any one of claims 1 to 7, wherein the proportion of the core-shell-type elastomer particle is from 1.0 to 20.0 percent by mass.

9. The composition according to any one of claims 1 to 8, further comprising a radical polymerizable oligomer.

10. The composition according to claim 9, wherein a proportion of the radical polymerizable oligomer is from 1.0 to 40.0 percent by mass.

11. The composition according to claim 9 or 10, wherein the radical polymerizable oligomer comprises a urethane acrylate oligomer,

12. The use of the composition according to any one of claims 1 to 11 in solid freeform fabrication.

13. A method of fabricating a solid freeform fabrication object comprising:
curing the composition of any one of claims 1 to 11 with an active energy ray.

14. The method according to claim 13, further comprising applying the composition of any one of claims 1 to 11 by discharging the composition by an inkjet head (31, 32).

## Patentansprüche

1. Durch aktive Energiestrahlen härtbare Zusammensetzung zum Aufbringen durch Tintenstrahlen, Folgendes umfassend:
ein radikalpolymerisierbares Monomer;
ein Elastomerpartikel vom Kern-Mantel-Typ; und
einen Polymerisationsinitiator;
wobei ein Anteil des radikalpolymerisierbaren Monomers zwischen 50,0 und 95,0 Masseprozent liegt und ein Anteil des Elastomerpartikels vom Kern-Mantel-Typ zwischen 0,5 und 40,0 Masseprozent liegt.

2. Zusammensetzung nach Anspruch 1, mit einer Viskosität von 200 mPa·s oder weniger bei 25 Grad C, gemessen wie in der Beschreibung beschrieben.

3. Zusammensetzung nach einem der Ansprüche 1 bis 2, wobei ein Anteil des Polymerisationsinitiators zwischen 0,1 und 10,0 Masseprozent liegt.

4. Zusammensetzung nach einem der Ansprüche 1 bis 3, wobei das radikalpolymerisierbare Monomer ein acrylbasiertes Monomer umfasst.

5. Zusammensetzung nach einem der Ansprüche 1 bis 4, wobei das Elastomerpartikel vom Kern-Mantel-Typ einen mittleren Volumendiameter zwischen 50 und 1 000 nm aufweist, gemessen wie in der Beschreibung beschrieben.

6. Zusammensetzung nach einem der Ansprüche 1 bis 5, wobei das Elastomerpartikel vom Kern-Mantel-Typ eine mehrschichtige Struktur aufweist, die aus einem Kernteil und einem Mantelteil ausgebildet ist

7. Zusammensetzung nach Anspruch 6, wobei der Kernteil eines von Folgendem einschließt: Kautschuk und thermoplastische Harze.

8. Zusammensetzung nach einem der Ansprüche 1 bis 7, wobei der Anteil des Elastomerpartikels vom Kern-Mantel-Typzwischen 1,0 und 20,0 Masseprozent liegt.

9. Zusammensetzung nach einem der Ansprüche 1 bis 8, ferner umfassend ein radikalpolymerisierbares Oligomer.

10. Zusammensetzung nach Anspruch 9, wobei ein Anteil des radikalpolymerisierbaren Oligomers zwischen 1,0 und 40,0 Masseprozent liegt.

11. Zusammensetzung nach Anspruch 9 oder 10, wobei das radikalpolymerisierbare Oligomer ein Urethan-Acrylat-Oligomer umfasst.

12. Verwendung der Zusammensetzung nach einem der Ansprüche 1 bis 11 in Festkörper-Freiform-Herstellung.

13. Verfahren zum Herstellen eines Objekts in Festkörper-Freiform-Herstellung, Folgendes umfassend:
Aushärten der Zusammensetzung nach einem der Ansprüche 1 bis 11 mit einem aktiven Energiestrahl.

14. Verfahren nach Anspruch 13, ferner umfassend das Aufbringen der Zusammensetzung nach einem der Ansprüche 1 bis 11 durch Abgeben der Zusammensetzung durch einen Tintenstrahlkopf (31, 32).

## Revendications

1. Composition durcissable par rayons énergétiques actifs pour une application à jet d'encre, comprenant :
un monomère polymérisable par radicaux ;
une particule d'élastomère de type noyau-enveloppe ; et
un initiateur de polymérisation ;
dans laquelle une proportion du monomère polymérisable par les radicaux est comprise entre 50,0 et 95,0 % en masse et une proportion de la particule d'élastomère de type noyau-enveloppe est comprise entre 0,5 et 40,0 % en masse.

2. Composition selon la revendication 1, ayant une viscosité de 200 mPa s ou moins à 25 degrés C, mesurée comme indiqué dans la description.

3. Composition selon l'une quelconque des revendications 1 à 2, dans laquelle une proportion de l'initiateur de polymérisation est de 0,1 à 10,0 pour cent en masse.

4. Composition selon l'une quelconque des revendications 1 à 3, dans laquelle le monomère polymérisable par les radicaux comprend un monomère à base d'acrylique.

5. Composition selon l'une quelconque des revendications 1 à 4, dans laquelle la particule d'élastomère de type noyau-enveloppe a un diamètre volumique moyen de 50 à 1 000 nm, mesuré comme indiqué dans la description.

6. Composition selon l'une quelconque des revendications 1 à 5, dans laquelle la particule d'élastomère de type noyau-enveloppe a une structure multicouche formée d'une partie noyau et d'une partie enveloppe.

7. Composition selon la revendication 6, dans laquelle la partie centrale inclut l'un parmi : du caoutchouc et résines thermoplastiques.

8. Composition selon l'une quelconque des revendications 1 à 7, dans laquelle la proportion de la particule d'élastomère de type noyau-enveloppe est de 1,0 à 20,0 pour cent en masse.

9. Composition selon l'une quelconque des revendications 1 à 8, comprenant en outre un oligomère polymérisable par radicaux.

10. Composition selon la revendication 9, dans laquelle une proportion de l'oligomère polymérisable par radicaux est comprise entre 1,0 et 40,0 % en masse.

11. Composition selon les revendications 9 ou 10, dans laquelle l'oligomère polymérisable par radicaux comprend un oligomère d'acrylate d'uréthane.

12. Utilisation de la composition selon l'une quelconque des revendications 1 à 11 dans la fabrication de solides à forme libre.

13. Procédé de fabrication d'un objet de fabrication de solides à forme libre comprenant :
le fait de faire durcir la composition selon l'une quelconque des revendications 1 à 11 à l'aide d'un rayon à énergie active.

14. Procédé selon la revendication 13, comprenant en outre l'application de la composition selon l'une quelconque des revendications 1 à 11 par décharge de la composition par une tête à jet d'encre (31, 32).
